# EUROPEAN PATENT APPLICATION

(11) **EP 1 511 292 A2**
(43) Date of publication of application: **02.03.2005**
(21) Application number: 04020141.0
(22) Date of filing: 25.08.2004
(51) Int. Cl.: H04N 1/32

(54) **Image outputting system**

(30) Priority: 29.08.2003 JP 2003306195
(71) Applicant: Konica Minolta Medical & Graphic Inc., Tokyo 163-0512 (JP)
(72) Inventor: Kido, Atsushi Konica Minolta Medical & Graphic Inc, Hachioji-shi Tokyo, 192-8505 (JP)
(74) Representative: Wenning, Ekkehard

(57) **Abstract**

There is described an image outputting system which has an image editing terminal, at one end, that transmits digital image data based on an original image for printing plate making, and the image outputting apparatus, at the other end, that receives the digital image data and outputs the original image for printing plate making. In the image outputting system, the image outputting apparatus reads an original image for printing plate making added with written correction instructions and transmits the image data of the original image. The image-editing terminal having received the image data displays the original image for printing plate making added with the written correction instructions, the original image being based on the image data. Thus, the image outputting system performs editing to correct the original image for printing plate making, according to the correction instructions written on the original image for printing plate making.

## Description

### BACKGROUND OF THE INVENTION

The present invention relates to an image outputting system, an image outputting apparatus, an image outputting method, a program, and a storage medium having the program, as described below. The image outputting system has an image editing terminal, at one end, that transmits digital image data based on an original image for printing plate making, and the image outputting apparatus, at the other end, that receives the digital image data and outputs the original image for printing plate making, the original image for printing plate making being an image based on the digital image data. In the image outputting system, the image outputting apparatus reads an original image for printing plate making added with written correction instructions and transmits the image data of the original image. The image editing terminal having received the image data displays the original image for printing plate making added with the written correction instructions, the original image being based on the image data. Thus, the image outputting system performs editing to correct the original image for printing plate making, according to correction instructions written on the original image for printing plate making.

In recent years, with diffusion of DTP (Desk Top Publishing) and the like, image editing, by the use of computer software, of an image that is input from a scanner followed by page-imposing is widely performed, where fully digital editing has become more usual.

In such processing, further efficiency is pursued by performing: image setter output that directly outputs, on a film, image data having been subjected to page-imposition; CTP (Computer to Plate) output that directly records an image on a printing plate; and further CTC (Computer to Cylinder) that directly records an image on a printing plate winded around a cylinder of a printing machine.

In this situation, performing output on a film, a printing plate, or the like, only for correction and confirmation, and then performing printing correction or correction with other correction materials, causes a problem of wasting films or wasting printing plates, and requiring extra work.

Therefore, in such a process of fully digital image forming and editing by a computer, a system for performing direct output of color images, called DDCP (Direct Digital Color Proof), is required.

The object of DDCP described above is to create a DCP (Digital Color Proof), which is a color sample simulating an image, and to confirm pictures, color tones, and sentences and characters of the DCP, before recording image data having been subjected to page-imposition by an image setter or the like on a film for plate making, performing final printing works to directly produce a printing plate by CTP, or directly recording by CTC the image on a printing plate winded around a cylinder of a printing machine.

Further, with such a DCP creating system, image data (image data before imposing pages) of each single page is output in a small size by a color laser printer, and pictures, color tones, and sentences and characters of a color comprehensive layout, which is the resulted output, are confirmed, before creating the DCP.

That is, in a printing plate making process, usually, a color comprehensive layout or DCP is created for confirming pictures, color tones, and sentences and characters, of an output object, and color correction is performed, before performing final printing work.

Recently, the performance of a color laser printer has been increased, enabling color output at low cost, at high speed, and with high quality. Accordingly, demand for using such a color laser printer for the purpose of creating a DCP has risen. Since image data for creating a DCP is output as a large sized image as described above, the image data is divided when printed by a color laser printer.

Such a color laser printer can be, for example, a color laser printer, by an elecrtophotographic method, disclosed in TOKKAI No. H05-48857, and a multifunctional machine incorporating the functions of a scanner, copier, and facsimile (refer to Patent Document 1, for example).

A site where such a color laser printer is installed, which is a site where DCPs are output by the color laser printer, is the location of a printing orderer or a design production company. On the other hand, a site where a client terminal that transmits edited image data to the color laser printer is installed, that is, where image editing and printing are performed, is the location of a printing company. And these sites are often distant.

In this situation, conventionally, a cycle described below has been repeated several times. Through each cycle, a color proof created by a printing company is postally mailed to an orderer or a design production company, and then the orderer or the design production company makes "handwritten corrections (in other words, writing corrections with a marker pen, and thus giving instructions)" and returns the corrected color proof to the printing company.

However, since this process has a problem of requiring mailing cost and days, "remote correcting" has recently come to be tried, in which image output of image data is transmitted via a network from a system on the side of a printing company to a color laser printer installed on the side of a orderer or a design production company. Further, in more and more cases, on the side of an orderer or a design production company, image data, of an image output result, added with handwritten corrections is read by a scanner mounted on a color laser printer, for example, and is digitized to be transmitted (electric transmission and disclosure) to a printing company via a network.

For example, in TOKKAI No. 2003-143394, there is disclosed a remote color proof system that handles scan images with handwritten corrections as described above, separating image data of "handwritten portions" (hereinafter, referred to as "handwritten correction" information) and original image data onto different layers. This aims to reconstruct "handwritten correction" information on original image data and output the image data on a paper sheet (for example, refer to Patent Document 2).
[Patent document 1] TOKKAI No. H05-48857 (paragraph [0011] - [0070], and Figs. 1 - 13)
[Patent document 2] TOKKAI No. 2003-143394 (paragraph [0015] - [0064], and Figs. 1 - 7)

However, with such a remote color proof system, a complex processing means for performing the above process of dividing layers and reconstructing the layers is required, which causes increase in cost of the system.

On the other hand, the primary object of "handwritten correction" is to transmit correction instructions. Therefore, output on a paper sheet is not necessarily required, and, confirmation on a monitor is practically enough. Further, in this situation, there is no need of separating "handwritten correction" information and original image data onto different layers, and it is only required to disclose and transmit a result of scanning of "handwritten corrections" as it is. If monitor displaying is intended in this situation, the transmission amount on a network can be decreased by reducing the resolution of a scan image.

### SUMMARY OF THE INVENTION

To overcome the abovementioned drawbacks in conventional image outputting systems, it is an object of the present invention to provide an image outputting system, an image outputting apparatus, an image outputting method, a program, and a storage medium having the program, as described below. The image outputting system has an image editing terminal that transmits digital image data based on an original image for printing plate making at one end, and the image outputting apparatus, at the other end, that receives the digital image data and outputs the original image for printing plate making, the original image for printing plate making being an image based on the digital image data. In the image outputting system, the image outputting apparatus reads an original image for printing plate making added with written correction instructions and transmits the image data of the original image. The image editing terminal having received the image data displays the original image for printing plate making added with the written correction instructions, the original image being based on the image data. Thus, it is possible for a worker to edit to correct the original image for printing plate making added with the written correction instructions without outputting the original image on a paper sheet. The image outputting system also makes it possible to reduce the network cost, by performing transmission of the image data of the original image for printing plate making in a minimum required resolution that is enough for visibility on the display screen and thus decreasing the transmission amount.

Accordingly, to overcome the cited shortcomings, the abovementioned object of the present invention can be attained by image outputting systems, image outputting apparatus, image outputting methods, computer programs and a storage medium having the computer program, described as follow.
(1) An image outputting system, comprising: an image-editing terminal device, provided with a display section for displaying an original document image to be formed on a printing plate and an editing section for editing the original document image, to transmit first digital image data that represent a first document image acquired by editing the original document image by means of the editing section; and an image outputting apparatus to receive the first digital image data transmitted from the image-editing terminal device, so as to output the first document image based on the first digital image data; wherein the image outputting apparatus includes: a scanner section to photo-electronically read a second document image that is created from the first document image by writing correction instructions on it, with a resolution designated within a predetermined range, so as to generate second digital image data; a storage section to store the second digital image data; and a transmitting section to transmit the second digital image data stored in the storage section to the image-editing terminal device through a network, so as to edit the second document image based on the second digital image data according to the correction instructions written on the second document image.
(2) The image outputting system of item 1, wherein the resolution, with which the scanner section reads the second document image, is lower than that of the first document image.
(3) The image outputting system of item 1, wherein the predetermined range is in a range of 46.4 dpi - 325.1 dpi.
(4) The image outputting system of item 1, wherein the image outputting apparatus further includes: a reading-resolution designating section to designate the resolution with which the scanner section reads the second document image.
(5) An image outputting system, comprising: an image-editing terminal device, provided with a display section for displaying an original document image to be formed on a printing plate and an editing section for editing the original document image, to transmit first digital image data that represent a first document image acquired by editing the original document image by means of the editing section; and an image outputting apparatus to receive the first digital image data transmitted from the image-editing terminal device, so as to output the first document image based on the first digital image data; wherein the image outputting apparatus includes: a scanner section to photo-electronically read a second document image that is created from the first document image by writing correction instructions on it, so as to generate second digital image data; a storage section to store the second digital image data; a resolution converting section to convert a resolution of the second digital image data stored in the storage section, so as to generate third digital image data having a converted resolution; and a transmitting section to transmit the third digital image data to the image-editing terminal device through a network, so as to edit the second document image based on the third digital image data according to the correction instructions written on the second document image.
(6) The image outputting system of item 5, wherein the converted resolution of the third digital image data is lower than that of the second digital image data.
(7) The image outputting system of item 5, wherein the converted resolution of the third digital image data is in a range of 46.4 dpi - 325.1 dpi.
(8) The image outputting system of item 5, wherein the image outputting apparatus further includes: a converted-resolution designating section to designate the converted resolution in a range of 46.4 dpi - 325.1 dpi; and wherein the resolution converting section converts the resolution of the second digital image data stored in the storage section, so as to generate the third digital image data having the converted resolution designated by the converted-resolution designating section.
(9) The image outputting system of item 5, wherein the image outputting apparatus further includes: a data acquisition section to acquire data of a size of the first document image and a resolution of the display section; and wherein the resolution converting section converts the resolution of the second digital image data, stored in the storage section, within a range of 46.4 dpi - 325.1 dpi, corresponding to the data of the size of the first document image and the resolution of the display section, acquired by the data acquisition section, so as to generate the third digital. image data having the converted resolution.
(10) The image outputting system of item 1, wherein a size of the original document image is in a range from a postcard size to an A3 size, while a resolution of the display section, which displays the second document image having the correction instructions on it, is in a range of 768x1024 dots - 1024×1280 dots.
(11) The image outputting system of item 1, wherein the image outputting apparatus is a color laser printer.
(12) An image outputting apparatus that receives first digital image data transmitted from an image-editing terminal device, which is provided with a display section for displaying an original document image to be formed on a printing plate and an editing section for editing the original document image, and that outputs a first document image based on the first digital image data, which represent the first document image acquired by editing the original document image by means of the editing section, the image outputting apparatus comprising: a scanner section to photo-electronically read a second document image that is created from the first document image by writing correction instructions on it, with a resolution designated within a predetermined range, so as to generate second digital image data; a storage section to store the second digital image data; and a transmitting section to transmit the second digital image data stored in the storage section to the image-editing terminal device through a network, so as to edit the second document image based on the second digital image data according to the correction instructions written on the second document image.
(13) The image outputting apparatus of item 12, wherein the resolution, with which the scanner section reads the second document image, is lower than that of the first document image.
(14) The image outputting apparatus of item 12, wherein the predetermined range is in a range of 46.4 dpi - 325.1 dpi.
(15) The image outputting apparatus of item 12, further comprising: a reading-resolution designating section to designate the resolution with which the scanner section reads the second document image.
(16) An image outputting apparatus that receives first digital image data transmitted from an image-editing terminal device, which is provided with a display section for displaying an original document image to be formed on a printing plate and an editing section for editing the original document image, and that outputs a first document image based on the first digital image data, which represent the first document image acquired by editing the original document image by means of the editing section, the image outputting apparatus comprising: a scanner section to photo-electronically read a second document image that is created from the first document image by writing correction instructions on it, so as to generate second digital image data; a storage section to store the second digital image data; a resolution converting section to convert a resolution of the second digital image data stored in the storage section, so as to generate third digital image data having a converted resolution; and a transmitting section to transmit the third digital image data to the image-editing terminal device through a network, so as to edit the second document image based on the third digital image data according to the correction instructions written on the second document image.
(17) The image outputting apparatus of item 16, wherein the converted resolution of the third digital image data is lower than that of the second digital image data.
(18) The image outputting apparatus of item 16, wherein the converted resolution of the third digital image data is in a range of 46.4 dpi - 325.1 dpi.
(19) The image outputting apparatus of item 16, further comprising: a converted-resolution designating section to designate the converted resolution in a range of 46.4 dpi - 325.1 dpi; wherein the resolution converting section converts the resolution of the second digital image data stored in the storage section, so as to generate the third digital image data having the converted resolution designated by the converted-resolution designating section.
(20) The image outputting apparatus of item 16, further comprising: a data acquisition section to acquire data of a size of the first document image and a resolution of the display section; and wherein the resolution converting section converts the resolution of the second digital image data, stored in the storage section, within a range of 46.4 dpi - 325.1 dpi, corresponding to the data of the size of the first document image and the resolution of the display section, acquired by the data acquisition section, so as to generate the third digital image data having the converted resolution.
(21) The image outputting apparatus of item 12, wherein a size of the original document image is in a range from a postcard size to an A3 size, while a resolution of the display section, which displays the second document image having the correction instructions on it, is in a range of 768x1024 dots - 1024x1280 dots.
(22) The image outputting apparatus of item 12, wherein the image outputting apparatus is a color laser printer.
(23) An image outputting method, employed in an image outputting system, which includes: an image-editing terminal device, provided with a display section for displaying an original document image to be formed on a printing plate and an editing section for editing the original document image, to transmit first digital image data that represent a first document image acquired by editing the original document image by means of the editing section; and an image outputting apparatus to receive the first digital image data transmitted from the image-editing terminal device, so as to output the first document image based on the first digital image data, the image outputting method comprising the steps of: photo-electronically reading a second document image that is created from the first document image by writing correction instructions on it, with a resolution designated within a predetermined range, so as to generate second digital image data; storing the second digital image data in a storage section; and transmitting the second digital image data stored in the storage section to the image-editing terminal device through a network, so as to edit the second document image based on the second digital image data according to the correction instructions written on the second document image.
(24) The image outputting method of item 23, wherein the resolution, with which the second document image is read in the reading step, is lower than that of the first document image.
(25) The image outputting method of item 23, wherein the predetermined range is in a range of 46.4 dpi - 325.1 dpi.
(26) The image outputting method of item 23, further comprising the step of: designating the resolution with which the second document image is read in the reading step.
(27) An image outputting method, employed in an image outputting system, which includes: an image-editing terminal device, provided with a display section for displaying an original document image to be formed on a printing plate and an editing section for editing the original document image, to transmit first digital image data that represent a first document image acquired by editing the original document image by means of the editing section; and an image outputting apparatus to receive the first digital image data transmitted from the image-editing terminal device, so as to output the first document image based on the first digital image data, the image outputting method comprising the steps of: photo-electronically reading a second document image that is created from the first document image by writing correction instructions on it, so as to generate second digital image data; storing the second digital image data in a storage section; converting a resolution of the second digital image data stored in the storage section, so as to generate third digital image data having a converted resolution; and transmitting the third digital image data to the image-editing terminal device through a network, so as to edit the second document image based on the third digital image data according to the correction instructions written on the second document image.
(28) The image outputting method of item 27, wherein the converted resolution of the third digital image data is lower than that of the second digital image data.
(29) The image outputting method of item 27, wherein the converted resolution of the third digital image data is in a range of 46.4 dpi - 325.1 dpi.
(30) The image outputting method of item 27, further comprising the step of: designating the converted resolution in a range of 46.4 dpi - 325.1 dpi; and wherein the resolution converting section converts the resolution of the second digital image data stored in the storage section, so as to generate the third digital image data having the converted resolution designated in the designating step.
(31) The image outputting method of item 27, further comprising the step of: acquiring data of a size of the first document image and a resolution of the display section; wherein the resolution of the second digital image data stored in the storage section is converted within a range of 46.4 dpi - 325.1 dpi, corresponding to the data of the size of the first document image and the resolution of the display section, acquired in the acquiring step, so as to generate the third digital image data having the converted resolution.
(32) The image outputting method of item 23, wherein a size of the original document image is in a range from a postcard size to an A3 size, while a resolution of the display section, which displays the second document image having the correction instructions on it, is in a range of 768x1024 dots - 1024x1280 dots.
(33) The image outputting method of item 23, wherein the image outputting apparatus is a color laser printer.
(34) A computer program for executing operations in an image outputting apparatus that receives first digital image data transmitted from an image-editing terminal device, which is provided with a display section for displaying an original document image to be formed on a printing plate and an editing section for editing the original document image, and that outputs a first document image based on the first digital image data, which represent the first document image acquired by editing the original document image by means of the editing section, the computer program comprising the functional steps of: photo-electronically reading a second document image that is created from the first document image by writing correction instructions on it, with a resolution designated within a predetermined range, so as to generate second digital image data; storing the second digital image data in a storage section; and transmitting the second digital image data stored in the storage section to the image-editing terminal device through a network, so as to edit the second document image based on the second digital image data according to the correction instructions written on the second document image.
(35) The computer program of item 34, wherein the resolution, with which the second document image is read in the reading step, is lower than that of the first document image.
(36) The computer program of item 34, wherein the predetermined range is in a range of 46.4 dpi - 325.1 dpi.
(37) The computer program of item 34, further comprising the functional step of: designating the resolution with which the second document image is read in the reading step.
(38) A computer program for executing operations in an image outputting apparatus that receives first digital image data transmitted from an image-editing terminal device, which is provided with a display section for displaying an original document image to be formed on a printing plate and an editing section for editing the original document image, and that outputs a first document image based on the first digital image data, which represent the first document image acquired by editing the original document image by means of the editing section, the computer program comprising the functional steps of: photo-electronically reading a second document image that is created from the first document image by writing correction instructions on it, so as to generate second digital image data; storing the second digital image data in a storage section; converting a resolution of the second digital image data stored in the storage section, so as to generate third digital image data having a converted resolution; and transmitting the third digital image data to the image-editing terminal device through a network, so as to edit the second document image based on the third digital image data according to the correction instructions written on the second document image.
(39) The computer program of item 38, wherein the converted resolution of the third digital image data is lower than that of the second digital image data.
(40) The computer program of item 38, wherein the converted resolution of the third digital image data is in a range of 46.4 dpi - 325.1 dpi.
(41) The computer program of item 38, further comprising the functional step of: designating the converted resolution in a range of 46.4 dpi - 325.1 dpi; and wherein the resolution converting section converts the resolution of the second digital image data stored in the storage section, so as to generate the third digital image data having the converted resolution designated in the designating step.
(42) The computer program of item 38, further comprising the functional step of: acquiring data of a size of the first document image and a resolution of the display section; wherein the resolution of the second digital image data stored in the storage section is converted within a range of 46.4 dpi - 325.1 dpi, corresponding to the data of the size of the first document image and the resolution of the display section, acquired in the acquiring step, so as to generate the third digital image data having the converted resolution.
(43) The computer program of item 34, wherein a size of the original document image is in a range from a postcard size to an A3 size, while a resolution of the display section, which displays the second document image having the correction instructions on it, is in a range of 768×1024 dots - 1024×1280 dots.
(44) The computer program of item 34, wherein the image outputting apparatus is a color laser printer.
(45) A storage medium, storing: a computer program for executing operations in an image outputting apparatus that receives first digital image data transmitted from an image-editing terminal device, which is provided with a display section for displaying an original document image to be formed on a printing plate and an editing section for editing the original document image, and that outputs a first document image based on the first digital image data, which represent the first document image acquired by editing the original document image by means of the editing section; wherein the computer program comprises the functional steps of: photo-electronically reading a second document image that is created from the first document image by writing correction instructions on it, with a resolution designated within a predetermined range, so as to generate second digital image data; storing the second digital image data in a storage section; and transmitting the second digital image data stored in the storage section to the image-editing terminal device through a network, so as to edit the second document image based on the second digital image data according to the correction instructions written on the second document image.
(46) The storage medium of item 45, wherein the resolution, with which the second document image is read in the reading step, is lower than that of the first document image.
(47) The storage medium of item 45, wherein the predetermined range is in a range of 46.4 dpi - 325.1 dpi.

If an image outputting system, an image outputting apparatus, an image outputting method, a program, and a storage medium having the program, are provided according to the invention, the image outputting apparatus reads an original image for printing plate making added with written correction instructions and transmits the image data of the original image. The image editing terminal having received the image data displays the original image for printing plate making added with the written correction instructions, the original image being based on the image data. Thus, it is possible for a worker to edit to correct the original image for printing plate making added with the written correction instructions without outputting the original image on a paper sheet. The image outputting system also makes it possible to reduce the network cost, by performing transmission of the image data of the original image for printing plate making in a minimum required resolution that is enough for visibility on the display screen and thus decreasing the transmission amount.

Further, if an image outputting system, an image outputting apparatus, an image outputting method, a program, and a storage medium having the program, are provided according to the invention, and if the image outputting apparatus is installed on the location of a printing orderer or a design production company, and the image editing terminal is installed at a printing company, then sending and receiving of an original image for printing plate making having been performed by postal mailing can be performed via networks, which makes it possible to reduce cost and time required for sending and receiving the original image for printing plate making.

### BRIEF DESCRIPTION OF THE DRAWINGS

Other objects and advantages of the present invention will become apparent upon reading the following detailed description and upon reference to the drawings in which:
Fig. 1 is a configuration diagram showing the entire configuration of an image outputting system in an embodiment of the invention;
Fig. 2 is a flowchart showing the flow of a series of steps of a printing plate making work performed by the image outputting system shown in Fig. 1;
Fig. 3 is a function block diagram showing the detailed configuration of a color laser printer and a client terminal shown in Fig. 1;
Fig. 4 is a flowchart showing the flow of a series of steps of a printing plat making process performed between the color laser printer and the client terminal shown in Fig. 3;
Fig. 5 is an explanation diagram for explaining the reason the resolution of digital image data is determined in the color laser printer in a predetermined range;
Fig. 6 is a function block diagram showing the detailed configuration of a color laser printer, shown in Fig. 1, in another embodiment; and
Fig. 7 is a flowchart showing the flow of a series of steps of a printing plant making process performed between the color laser printer and a client terminal shown in Fig. 6.

### DETAILED DESCRIPTION OF THE PREFERRED EMBODIMENT

An image outputting system, an image outputting apparatus, an image outputting method, a program, and a storage medium having the program in an embodiment according to the invention will now be described in detail referring to the drawings.

### [Image Outputting System]

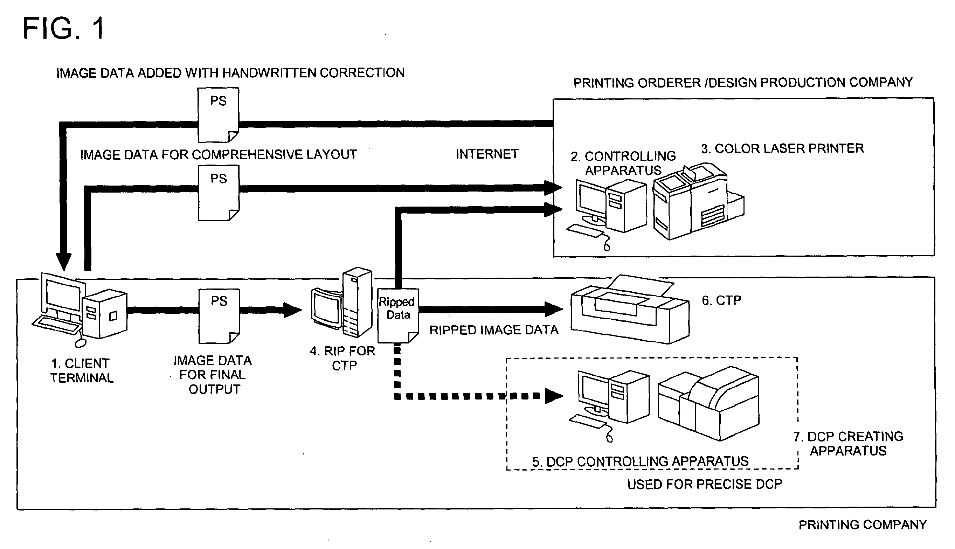

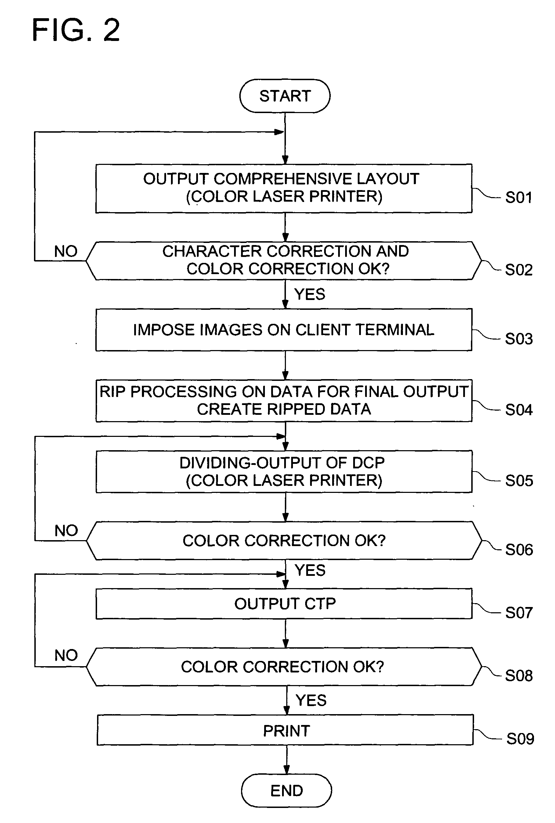

First, the system configuration and an outline of the operation of the image outputting system in the present embodiment will be explained, referring to Fig. 1 and along the flow in the flowchart shown in Fig. 2.

### <System Configuration>

As shown in Fig. 1, the image outputting system is comprised of: client terminal 1 that serves as an image-editing terminal device for image editing of image data and imposing a subset of image data; controlling apparatus 2 that transmits image data (image data of a single page before imposing pages) for a comprehensive layout described in PostScript, for example, or image data (image data made by imposing a plurality of image data for a comprehensive layout) for final output transmitted from later described RIP 4 for CTP, together with output information, specifically information that designates the size and type of a recording sheet on which an image based on the above image data is output, to a color laser printer 3 which is an image outputting apparatus described later; the color laser printer 3 that outputs an image based on the image data for the comprehensive layout having been transmitted from the controlling apparatus 2, or outputs an image based on image data (image data made by imposing a plurality of image data for a comprehensive layout) for final output transmitted from later described RIP 4 for CTP, on a sheet of a specific size and type according to the output information (divided output depending on the size of the image); the RIP 4, for CTP, that performs RIP processing on image data for final output described, for example, in PostScript, the image data for final output having been transmitted from the client terminal 1 (that is, converting the final image data into bitmap data to fit the output resolution of CTP 6 or DCP creating apparatus 7), and then transmits the bitmap data to the controlling apparatus 2, CTP6, or DCP controlling apparatus 5 if a precise DCP is necessary; the DCP creating apparatus 7 that outputs an image, as a DCP, based on the image data, for final output, having been transmitted from the RIP 4 for CTP via the DCP controlling apparatus 5; and the CTP 6 that outputs an image based on the image data, for final output, having been transmitted from the RIP 4 for CTP.

As shown in Fig. 1, the client terminal 1, the RIP 4 for CTP, the CTP 6, the DCP controlling apparatus 5, and the DCP creating apparatus 7, are installed at a printing company, while the controlling apparatus 2 and the color laser printer 3 are installed on the location of a printing orderer or a design production company.

Each of the client terminal 1, the controlling apparatus 2, the RIP 4 for CTP, and the DCP controlling apparatus 5, operates as a computer terminal, comprises a computer itself, a key board, a display means, and others, and incorporates a certain program to perform image editing and page imposition, described above, of image data. The client terminal 1 further comprises an image input device, such as an image scanner, that is necessary.

The color laser printer 3 is a electrophotographic copying means or a multi-function printer having a scan means such as an image scanner as well as a plurality of sheet feeding cassettes storing a recording sheets of a plurality of sizes and types, and an input means for input operation to make a sheet information memorizing means, which is integrated in the printer 3, memorize the sizes and types of the recording sheets to be stored in the respective sheet feeding cassettes and display means to display an input screen (for example, a touch panel) during the input operation. As described above, according to the output information transmitted from the controlling apparatus 2, a sheet feeding cassette having recording sheets of a specific size and type is selected, and an image based on image data for a comprehensive layout or an image based on image data for final output is output (dividedly output depending on the size of the image) on a recording sheet fed from the selected sheet feeding cassette.

### <Outline of Operation>

As shown in Fig. 2, in this configuration, image data edited with the client terminal 1 is transmitted to the controlling apparatus 2, then the controlling apparatus 2 having received the image data transmits the image data as well as output information to the color laser printer 3. The color laser printer 3, having received the image data and the output information, outputs a color comprehensive layout on a recording sheet of the specific size and type, according to the output information (S01). The "color comprehensive layout" described here is a colored finishing sample. Thus, a finished image near to a final printing is produced to be shown as a dummy of a photograph or illustration of imposed pages, for discussion as to whether the design is suitable for planning and editing intention, or for obtaining acceptance of the design from the client. In this situation, individual single pages are output in a small size, and the results of character correction and the like are confirmed by the printing orderer or a designer.

At this time, parts of problems, that is, portions requiring corrections, are given with correction instructions by the printing orderer or the designer, more specifically, "handwritten corrections (writing with a marker pen or the like)" are performed, and the color comprehensive layout added with the "handwritten corrections" is read by the image scanner of the color laser printer 3. The color laser printer 3 having received the color comprehensive layout read by the image scanner converts it into digital image data, and transmits the digital image data to the client terminal 1 via the controlling apparatus 2. Details of the transmission of the digital image data will be described in the later description "Color Laser Printer".

The client terminal 1 having received the digital image data displays an image based on the digital image data, that is, an image added with the "handwritten corrections" on the display means. A worker of the printing company performs image editing at the client terminal 1, according to the correction instructions by the "handwritten corrections". The edited image data is again transmitted to the controlling apparatus 2, and the controlling apparatus 2 having received the edited image data transmits the image data together with output information to the color laser printer 3. The color laser printer 3 having received the image data and the output information again outputs a color comprehensive layout on a recording sheet of a specific size and type, according to the output information.

After repeating this work several times, if it is confirmed by the printing orderer or the designer that there is no problem (S02, Yes), imposing is performed by the client terminal 1 (S03). The above described "imposing" means a work of pasting images such as photographs or illustrations in a unit of 16 pages, 8 pages, or 4 pages, the images being fitted to the size of sheets to be loaded to a printing apparatus, such that numbers (numbers at the edge of a page to indicate the page number) are in order when a plate making film has been finally printed and set into signature.

Next, the worker of the printing company transmits image data for final output, the image data having been subjected to imposing, from the client terminal 1 to the RIP 4 for CTP, and then, the RIP 4 for CTP, having received the image data for final output, performs RIP processing on the image data for final output. Specifically, the image data for final output is converted into bitmap data fitted to the output resolution of the DCP creating apparatus 7 or the CTP 6, and thus image data having been subjected to RIP processing is created (S04). This RIPped image data is transmitted from the RIP 4 for CTP to the controlling apparatus 2, then the controlling apparatus 2, having received the RIPped image data, transmits the image data together with output information to the color laser printer 3, and the color laser printer 3 having received the image data and the output information, according to the output information, outputs (dividedly outputs, depending on the size of the image) an image based on the image data for final output on a recording sheet of a specific size and type (S05). If divided output is performed in this situation, the printing orderer or the designer finally creates a DCP by pasting outputs having been made as mentioned above. Incidentally, in the case where a precise DCP is necessary, the RIP 4 for CTP transmits the RIPped image data to the DCP controlling apparatus 5, then the DCP controlling apparatus 5, having received the RIPped image data, controls output of the DCP creating apparatus 7, and the DCP creating apparatus 7 outputs an image based on the image data for final output (S05). In this case, an imposed image is output as a single DCP. As a recording sheet on which the image based on the image data for final output is output by the color laser printer 3, the same type as a sheet for printing by a printing machine, or a similar type, is designated by the output information.

Next, color correction of the DCP is performed, and if it is confirmed by the printing orederer or the designer that there is no problem (S06, Yes), then the orederer or the designer transmits the RIPped data (the same data as the data used for output of the above DCP) from the RIP 4 for CTP to the CTP 6, and the CTP 6 having received the RIPped data directly records an image on a printing plate (S07). The worker of the printing company performs printing with the printing plate, and thereafter color correction is performed on the resulted printing, which is an imposed image. Then, if it is confirmed by the worker that there is no problem (S08, Yes), then the process is forwarded to final printing with the printing machine (S09).

### [Color Laser Printer]

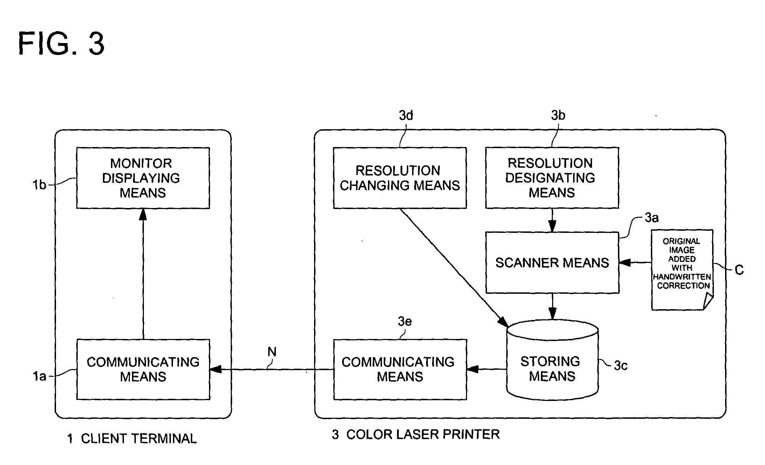

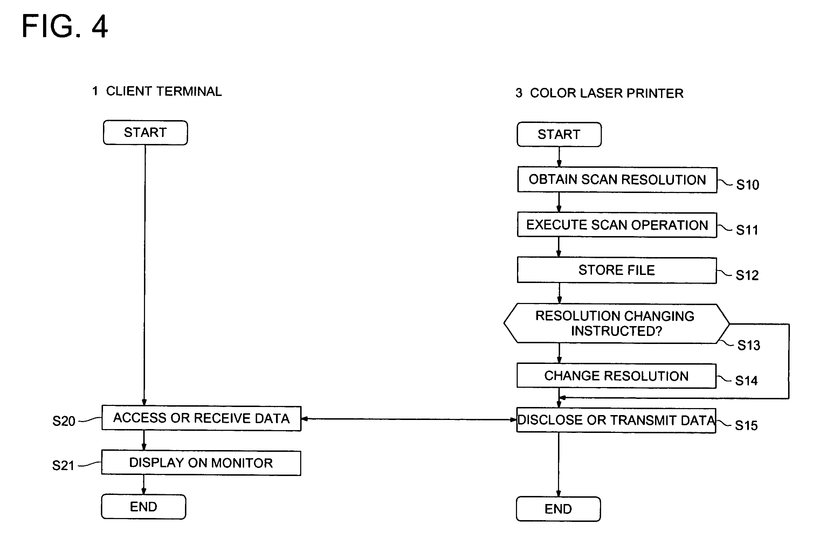

Next, the detailed configuration and detailed operation of the color laser printer 3 that is an image outputting apparatus and a component of the image outputting system will be described along the flow of a flowchart shown in Fig.4, referring to Figs. 3 to 5. In the following, the flow of a series of processing steps will be described with extraction of characteristic points of the invention, wherein the processing steps include outputting of an image as a color comprehensive layout by the color laser printer 3, the image being based on image data received from the client terminal 1, correcting of the color comprehensive layout by a worker, and performing imposing work by the client terminal 1 when it is confirmed that there is no problem.

### <Detailed Configuration>

As shown in Fig. 3, the color laser printer 3 comprises: a scanner means 3a for reading an original image C for printing plate making added with "handwritten corrections" and converting it into digital image data; a resolution designating means 3b for letting the worker designate, via a GUI (Graphical User Interface), specifically, via a designating screen, the resolution in reading the original image C for printing plate making by the scanner means 3a; a storing means 3c for storing the digital image data converted by the scanner means 3a; a resolution changing means 3d for letting the worker change the resolution of the digital image data stored by the storing means 3c via a GUI, specifically, via a changing screen; and a communicating means 3e for transmitting the digital image data of which resolution has been changed by the resolution changing means 3d, to the client terminal 1 via a network N.

On the other hand, the client terminal 1 comprises a communicating means 1a for receiving the digital image data transmitted by the color laser printer 3; and a displaying means 1b for displaying an image based on the digital image data received by the communicating means 1a.

### <Detailed Operation>

In this configuration, the printing orderer or the designer, as shown in Fig. 4, designates, via the resolution designating means 3b of the color laser printer 3, the resolution (hereinafter, referred to as scan resolution) in reading, by the scanner means 3a, the original image C for printing plate making added with "handwritten corrections". In this situation, the resolution designating means 3b displays the designating screen for designating this scan resolution, on a displaying means (reading resolution designating screen displaying step), and the printing orderer or the designer designates the scan resolution by operating an operating means on the designating screen. Thus, the scan resolution is obtained (reading resolution designating step; S10). Incidentally, in order to set the resolution of digital image data to be stored in the storing means 3c to a minimum required resolution, taking into account visibility on the display screen of the displaying means 1b of the client terminal 1, the designating screen indicates, as described later, a range such that the resolution is to be designated in the range from 46.4 dpi to 325.1 dpi, or gives a display which allows designating of the resolution only in the above range.

The printing orderer or the designer further performs reading, by the scanner means 3a, of the original image C for printing plate making added with "handwritten corrections" (S11). Thereby, the original image C for printing plate making added with "handwritten corrections" is converted into digital image data (scanner step). The converted digital image data is stored in the storing means 3c (storing step; S12).

In order to change the resolution of the digital image data stored in the storing means 3c to a minimum required resolution (S13, Yes), as described above, taking into account visibility on the display screen of the display means 1b of the client terminal 1, the printing orderer or the designer changes the resolution of the digital image data by the resolution changing means 3d, as necessary. In this situation, the resolution changing means 3d displays, on the displaying means, the designating screen for designating the resolution in changing the resolution of the digital image data (resolution change designating screen displaying step), and the printing orderer or the designer designates the resolution of the digital image data after change, by operation of the operating means on the designating screen, in the range from 46.4 dpi to 325.1 dpi, and as a minimum required value, taking into account visibility on the display screen of the displaying means 1b of the client terminal 1 (resolution change designating step). In this situation, the designating screen indicates the above range, or gives a display which allows designating of the resolution only in the above range. With the above designation, the resolution changing means 3d changes the resolution of the digital image data stored in the storing means 3c to the designated resolution (resolution changing step; S14).

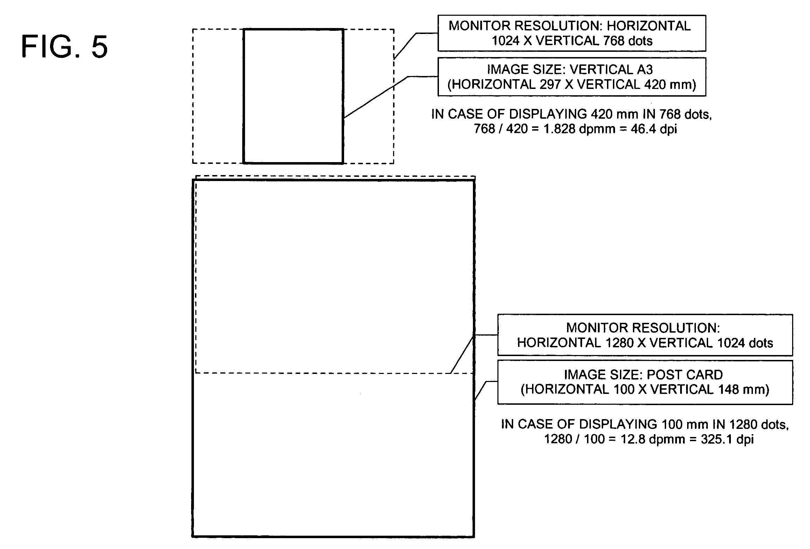

The reason for designating and changing the resolution in reading the original image C for printing plate making added with "handwritten corrections" or the resolution of the digital image data stored in the storing means 3c, in the range from 46.4 dpi to 325.1 dpi, will be described below with reference to Fig. 5.

For example, in case of scanning an original image in A3 size (297 x 420 mm) by the scanner means 3a in 600 dpi, the size of the image data (RGB) is a little greater than 200 MB, while it is approximately only 5.8 MB if 100 dpi is applied. Taking this into account, the optimum resolution range for this purpose (monitor displaying means 1b) can be determined with the assumptions described below.

Assumption 1: If 1 dot of image data is allocated to 1 dot of the monitor displaying means 1b of the client terminal 1, there is no problem with visibility in monitor displaying.

Assumption 2: The size of an original image to be scanned by the color laser printer 3 is in the range from the postal card size (148 x 100 mm) to A3 size (including A4, B4. etc. therebetween).

Assumption 3: The monitor resolution to be applied to the monitor displaying means 1b is 768 x 1024 dots at minimum, and 1024 x 1280 dots at maximum.

With these assumptions, in the case of displaying an original image in vertical A3 size (in the case of displaying an original image with a vertical size of 420 mm in 768 dots) on a monitor displaying means 3a having a resolution of 768 x 1024 dots, for example, the resolution of image data is the minimum, specifically, 768/420 dpmm = 1.828 dpmm = 46.4 dpi. On the other hand, in the case of displaying an original image in post card size (148 x 100 mm) (in the case of displaying an original image with a horizontal size of 100 mm in 1280 dots) on a monitor displaying means 3a having a resolution of 1024 x 1280 dots, for example, the resolution of image data is the maximum, specifically, 1280/100 dpmm = 12.8 dpmm = 325.1 dpi. Therefore, when digital image data is transmitted from the color laser printer 3 to the client terminal 1, determining the resolution in this range is proper. That is, as long as the resolution is determined in this range, a minimum required image quality can be obtained, while if the resolution exceeds this range, surplus image data is transmitted via the network. If the resolution is below this range, visibility on the screen is unachievable.

For this reason, when the worker designates, by the resolution designating means 3b or the resolution changing means 3d, the resolution of digital image data stored in the storing means 3c, the worker allocates each 1 dot of the image of the digital image data stored in the storing means 3c to each 1 dot of the display screen of the displaying means 1b of the client terminal 1. Thus, a minimum required resolution, for which visibility on the display screen of the displaying means 1b of the client terminal 1 is taken into account, can be designated in the above-described range from 46.4 dpi to 325.1 dpi.

Coming back to the description of processing steps, when the resolution of the digital image data stored in the storing means 3c has been changed by the resolution changing means 3d in such a manner, then, the communicating means 3e transmits the digital image data of which resolution having been changed, to the client terminal 1 (transmitting step; S15).

On the other hand, in the client terminal 1, the communicating means 1a receives the digital image data (S20), and the monitor displaying means 1b displays an image based on the received digital image data (S21).

The worker of the printing company refers to the image displayed on the monitor displaying means 1b, that is, the original image for printing plate making added with "handwritten corrections", and performs image editing, according to the correction instructions thereof.

The edited image data is again transmitted to the controlling apparatus 2. Hereafter, in correcting a color comprehensive layout output by the color laser printer 3, the above process is repeated until the printing orderer or the designer confirms that there is no problem.

As described above, with the image outputting system, the image outputting apparatus, the image outputting method, the program, and the storage medium having the program according to the present embodiment, an image added with "handwritten corrections" can be transmitted by the communicating means 3e of the color laser printer 3 via network N, and the image added with "handwritten corrections" can be displayed by the monitor displaying means 1b of the client terminal 1. Thus, the worker can perform editing of the image without outputting it on a sheet, and transmitting of the image added with "handwritten corrections" can be performed with a minimum required resolution, which can be set by the resolution changing means 3d of the color laser printer 3, for which visibility on the display screen of the monitor displaying means 1b of the client 1 is taken into account. Thus, the transmission amount can be decreased, making it possible to reduce the network cost to the minimum.

Further, if the image outputting system, the image outputting apparatus, the image outputting method, the program, and the storage medium having the program, are provided according to the present embodiment, by installing the color laser printer 3 on the location of the printing orderer or the design production company, sending and receiving of an original image added with "handwritten corrections" which has been conventionally performed by postal mailing can be performed via a network, and thus the cost and time required for sending and receiving the original image added with "handwritten corrections" can be reduced.

The above described image outputting system, image outputting apparatus, image outputting method, program, and storage medium having the program according to the present embodiment are an example of a preferable embodiment of the invention, which does not exclude other embodiments.

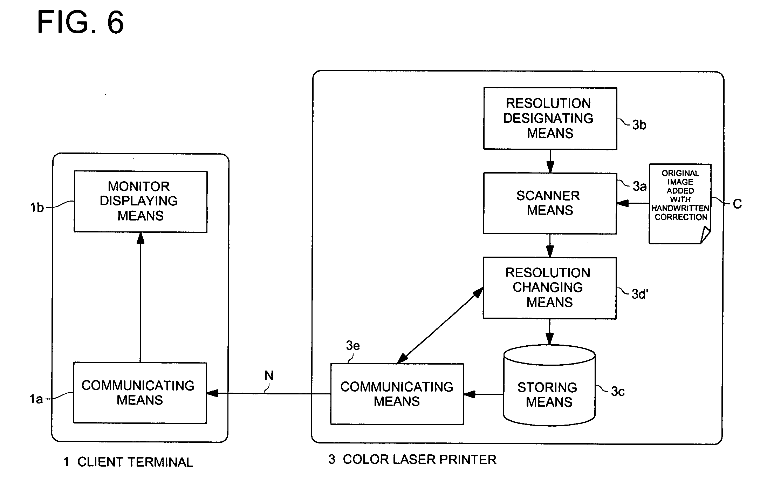

For example, although in the present embodiment, the printing orderer or the designer changes the resolution of digital image data stored in the storing means 3c of the color laser printer 3 by designating it in the range from 46.4 dpi to 325.1 dpi using the resolution changing means 3d, it is also possible, for example, as shown in Fig. 6, to provide a resolution changing means 3d' that automatically changes the resolution of digital image data, when the digital image data converted by the scanner means 3a is stored in the storing means 3c, in the range from 46.4 dpi to 325.1 dpi. Incidentally, the resolution changing means 3d' herein is provided with an obtaining means for obtaining the size of digital image data stored in the storing means 3c and the resolution of the monitor displaying means 1b of the client terminal 1.

In this case, when the resolution changing means 3d' changes the resolution of digital image data stored in the storing means 3c, the resolution changing means 3d' determines the resolution by allocating each 1 dot of the digital image data stored in the storing means 3c to each 1 dot of the display screen of the displaying means 1b of the client terminal 1, depending on the image size of the digital image data and the resolution of the display screen of the displaying means 1b of the client terminal 1. Thus, a minimum required resolution for which visibility on the display screen of the displaying means 1b of the client terminal 1 is taken into account is determined in the range from 46.4 dpi to 325.1 dpi.

Incidentally, <detailed operation> of the color laser printer 3' will be described below. In the following, similar component elements are given with the same reference symbols.

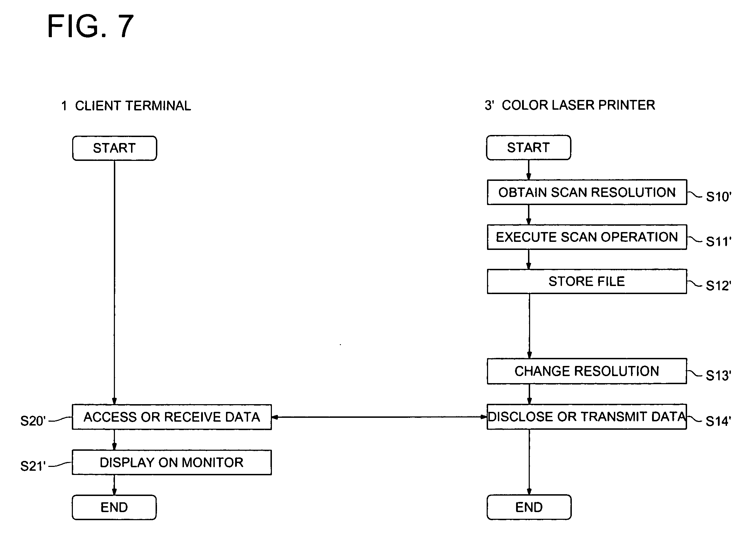

Using a resolution designating means 3b of the color laser printer 3', the printing orderer or the designer first designates, as shown in Fig. 7, resolution (hereinafter, referred to as scan resolution) in reading an original image C for printing plate making added with "handwritten corrections" by a scanner means 3a. The resolution designating means 3b herein displays a designating screen for designating the scan resolution on a displaying means (reading resolution designating screen displaying step). The printing orderer or the designer designates scan resolution by operation of an operating means on the designating screen, thereby obtaining the scan resolution (reading resolution designating step; S10'). The printing orderer or the designer further performs reading of the original image C for printing plate making added with "handwritten corrections" by the scanner means 3a (S11'). Thus, the original image C for printing plate making added with "handwritten corrections" is converted into digital image data (scanner step). Then, an obtaining means of a resolution changing means 3d' obtains the size of the digital image data stored in the storing means 3c, and also the resolution of the monitor means 1b of the client terminal 1 (obtaining step). Then, depending on these values, the resolution changing means 3d' changes the resolution of the converted digital image data, in the range from 46.4 dpi to 325.1 dpi, to a minimum required resolution for which visibility on the display screen of the displaying means 1b of the client terminal 1 is taken into account (resolution changing step; S12'). This digital image data of which resolution having been changed is stored in the storing means 3c (storing step; S13'). The resolution of the monitor displaying means 1b of the client terminal 1 herein may be obtained by the obtaining means of the resolution changing means 3d' from the client terminal 1 via a communicating means 3e, or set in advance in the resolution changing means 3d'.

When the digital image data has been stored in the storing means 3c in this way, the communicating means 3e transmits the digital image data to the client terminal 1 (transmitting step; S14').

On the other hand, in the client terminal 1, a communicating means 1a receives the digital image data (S20'), and the monitor displaying means 1b displays an image based on the received digital image data (S21').

A worker of a printing company refers to the image displayed on the monitor displaying means 1b, that is, the original image C for printing plat making, and performs image editing, according to the correction instructions thereof.

The edited image data is again transmitted to the controlling apparatus 2. Hereafter, in correcting a color comprehensive layout output by the color laser printer 3', the above process is repeated until the printing orderer or the designer confirms that there is no problem.

### [Program and Storage Medium Storing the Same]

The above mentioned processing performed by the color laser printer 3, which is a component element of the image outputting system, specifically, a program to execute the processing in each step having been described with reference to S10 to S15 in the flowchart in Fig. 4 is incorporated in the color laser printer 3, or stored in a connected storage medium, and read and executed by a computing means also incorporated in the color laser printer 3. Likewise, the above mentioned processing performed by the color laser printer 3', which is a component element of the image outputting system, specifically, a program to execute the processing in each step having been described with reference to S10' to S14' in the flowchart in Fig. 7 is incorporated in the color laser printer 3', or stored in a connected storage medium, and read and executed by a computing means also incorporated in the color laser printer 3'.

The above storage medium can be, for example, a semiconductor memory such as a ROM, Ram, or flash memory, and also can be a memory device such as an integrated circuit, an optical disk, a magneto-optical disk (CD-ROM/DVD-RAM/DVD-ROM/MO/etc.), a magnetic storage medium <magnetic disk> (hard disk/floppy (trade mark) disk/ZIP/etc.), or the like.

Disclosed embodiment can be varied by a skilled person without departing from the spirit and scope of the invention.

## Claims

1. An image outputting system, comprising:
an image-editing terminal device, provided with a display section for displaying an original document image to be formed on a printing plate and an editing section for editing said original document image, to transmit first digital image data that represent a first document image acquired by editing said original document image by means of said editing section; and
an image outputting apparatus to receive said first digital image data transmitted from said image-editing terminal device, so as to output said first document image based on said first digital image data;
wherein said image outputting apparatus includes:
a scanner section to photo-electronically read a second document image that is created from said first document image by writing correction instructions on it, with a resolution designated within a predetermined range, so as to generate second digital image data;
a storage section to store said second digital image data; and
a transmitting section to transmit said second digital image data stored in said storage section to said image-editing terminal device through a network, so as to edit said second document image based on said second digital image data according to said correction instructions written on said second document image.

2. The image outputting system of claim 1,
wherein said resolution, with which said scanner section reads said second document image, is lower than that of said first document image.

3. The image outputting system of claim 1,
wherein said predetermined range is in a range of 46.4 dpi - 325.1 dpi.

4. The image outputting system of claim 1,
wherein said image outputting apparatus further includes:
a reading-resolution designating section to designate said resolution with which said scanner section reads said second document image.

5. An image outputting system, comprising:
an image-editing terminal device, provided with a display section for displaying an original document image to be formed on a printing plate and an editing section for editing said original document image, to transmit first digital image data that represent a first document image acquired by editing said original document image by means of said editing section; and
an image outputting apparatus to receive said first digital image data transmitted from said image-editing terminal device, so as to output said first document image based on said first digital image data;
wherein said image outputting apparatus includes:
a scanner section to photo-electronically read a second document image that is created from said first document image by writing correction instructions on it, so as to generate second digital image data;
a storage section to store said second digital image data;
a resolution converting section to convert a resolution of said second digital image data stored in said storage section, so as to generate third digital image data having a converted resolution; and
a transmitting section to transmit said third digital image data to said image-editing terminal device through a network, so as to edit said second document image based on said third digital image data according to said correction instructions written on said second document image.

6. The image outputting system of claim 5,
wherein said converted resolution of said third digital image data is lower than that of said second digital image data.

7. The image outputting system of claim 5,
wherein said converted resolution of said third digital image data is in a range of 46.4 dpi - 325.1 dpi.

8. The image outputting system of claim 5,
wherein said image outputting apparatus further includes:
a converted-resolution designating section to designate said converted resolution in a range of 46.4 dpi - 325.1 dpi; and
wherein said resolution converting section converts said resolution of said second digital image data stored in said storage section, so as to generate said third digital image data having said converted resolution designated by said converted-resolution designating section.

9. The image outputting system of claim 5,
wherein said image outputting apparatus further includes:
a data acquisition section to acquire data of a size of said first document image and a resolution of said display section; and
wherein said resolution converting section converts said resolution of said second digital image data, stored in said storage section, within a range of 46.4 dpi - 325.1 dpi, corresponding to said data of said size of said first document image and said resolution of said display section, acquired by said data acquisition section, so as to generate said third digital image data having said converted resolution.

10. The image outputting system of claim 1,
wherein a size of said original document image is in a range from a postcard size to an A3 size, while a resolution of said display section, which displays said second document image having said correction instructions on it, is in a range of 768x1024 dots - 1024x1280 dots.

11. The image outputting system of claim 1,
wherein said image outputting apparatus is a color laser printer.

12. An image outputting apparatus that receives first digital image data transmitted from an image-editing terminal device, which is provided with a display section for displaying an original document image to be formed on a printing plate and an editing section for editing said original document image, and that outputs a first document image based on said first digital image data, which represent said first document image acquired by editing said original document image by means of said editing section, said image outputting apparatus comprising:
a scanner section to photo-electronically read a second document image that is created from said first document image by writing correction instructions on it, with a resolution designated within a predetermined range, so as to generate second digital image data;
a storage section to store said second digital image data; and
a transmitting section to transmit said second digital image data stored in said storage section to said image-editing terminal device through a network, so as to edit said second document image based on said second digital image data according to said correction instructions written on said second document image.

13. The image outputting apparatus of claim 12,
wherein said resolution, with which said scanner section reads said second document image, is lower than that of said first document image.

14. The image outputting apparatus of claim 12,
wherein said predetermined range is in a range of 46.4 dpi - 325.1 dpi.

15. The image outputting apparatus of claim 12, further comprising:
a reading-resolution designating section to designate said resolution with which said scanner section reads said second document image.

16. An image outputting apparatus that receives first digital image data transmitted from an image-editing terminal device, which is provided with a display section for displaying an original document image to be formed on a printing plate and an editing section for editing said original document image, and that outputs a first document image based on said first digital image data, which represent said first document image acquired by editing said original document image by means of said editing section, said image outputting apparatus comprising:
a scanner section to photo-electronically read a second document image that is created from said first document image by writing correction instructions on it, so as to generate second digital image data;
a storage section to store said second digital image data;
a resolution converting section to convert a resolution of said second digital image data stored in said storage section, so as to generate third digital image data having a converted resolution; and
a transmitting section to transmit said third digital image data to said image-editing terminal device through a network, so as to edit said second document image based on said third digital image data according to said correction instructions written on said second document image.

17. The image outputting apparatus of claim 16,
wherein said converted resolution of said third digital image data is lower than that of said second digital image data.

18. The image outputting apparatus of claim 16,
wherein said converted resolution of said third digital image data is in a range of 46.4 dpi - 325.1 dpi.

19. The image outputting apparatus of claim 16, further comprising:
a converted-resolution designating section to designate said converted resolution in a range of 46.4 dpi - 325.1 dpi;
wherein said resolution converting section converts said resolution of said second digital image data stored in said storage section, so as to generate said third digital image data having said converted resolution designated by said converted-resolution designating section.

20. The image outputting apparatus of claim 16, further comprising:
a data acquisition section to acquire data of a size of said first document image and a resolution of said display section; and
wherein said resolution converting section converts said resolution of said second digital image data, stored in said storage section, within a range of 46.4 dpi - 325.1 dpi, corresponding to said data of said size of said first document image and said resolution of said display section, acquired by said data acquisition section, so as to generate said third digital image data having said converted resolution.

21. The image outputting apparatus of claim 12,
wherein a size of said original document image is in a range from a postcard size to an A3 size, while a resolution of said display section, which displays said second document image having said correction instructions on it, is in a range of 768×1024 dots - 1024×1280 dots.

22. The image outputting apparatus of claim 12,
wherein said image outputting apparatus is a color laser printer.

23. An image outputting method, employed in an image outputting system, which includes: an image-editing terminal device, provided with a display section for displaying an original document image to be formed on a printing plate and an editing section for editing said original document image, to transmit first digital image data that represent a first document image acquired by editing said original document image by means of said editing section; and an image outputting apparatus to receive said first digital image data transmitted from said image-editing terminal device, so as to output said first document image based on said first digital image data, said image outputting method comprising the steps of:
photo-electronically reading a second document image that is created from said first document image by writing correction instructions on it, with a resolution designated within a predetermined range, so as to generate second digital image data;
storing said second digital image data in a storage section; and
transmitting said second digital image data stored in said storage section to said image-editing terminal device through a network, so as to edit said second document image based on said second digital image data according to said correction instructions written on said second document image.

24. The image outputting method of claim 23,
wherein said resolution, with which said second document image is read in said reading step, is lower than that of said first document image.

25. The image outputting method of claim 23,
wherein said predetermined range is in a range of 46.4 dpi - 325.1 dpi.

26. The image outputting method of claim 23, further comprising the step of:
designating said resolution with which said second document image is read in said reading step.

27. An image outputting method, employed in an image outputting system, which includes: an image-editing terminal device, provided with a display section for displaying an original document image to be formed on a printing plate and an editing section for editing said original document image, to transmit first digital image data that represent a first document image acquired by editing said original document image by means of said editing section; and an image outputting apparatus to receive said first digital image data transmitted from said image-editing terminal device, so as to output said first document image based on said first digital image data, said image outputting method comprising the steps of:
photo-electronically reading a second document image that is created from said first document image by writing correction instructions on it, so as to generate second digital image data;
storing said second digital image data in a storage section;
converting a resolution of said second digital image data stored in said storage section, so as to generate third digital image data having a converted resolution; and
transmitting said third digital image data to said image-editing terminal device through a network, so as to edit said second document image based on said third digital image data according to said correction instructions written on said second document image.

28. The image outputting method of claim 27,
wherein said converted resolution of said third digital image data is lower than that of said second digital image data.

29. The image outputting method of claim 27,
wherein said converted resolution of said third digital image data is in a range of 46.4 dpi - 325.1 dpi.

30. The image outputting method of claim 27, further comprising the step of:
designating said converted resolution in a range of 46.4 dpi - 325.1 dpi; and
wherein said resolution converting section converts said resolution of said second digital image data stored in said storage section, so as to generate said third digital image data having said converted resolution designated in said designating step.

31. The image outputting method of claim 27, further comprising the step of:
acquiring data of a size of said first document image and a resolution of said display section;
wherein said resolution of said second digital image data stored in said storage section is converted within a range of 46.4 dpi - 325.1 dpi, corresponding to said data of said size of said first document image and said resolution of said display section, acquired in said acquiring step, so as to generate said third digital image data having said converted resolution.

32. The image outputting method of claim 23,
wherein a size of said original document image is in a range from a postcard size to an A3 size, while a resolution of said display section, which displays said second document image having said correction instructions on it, is in a range of 768×1024 dots - 1024×1280 dots.

33. The image outputting method of claim 23,
wherein said image outputting apparatus is a color laser printer.

34. A computer program for executing operations in an image outputting apparatus that receives first digital image data transmitted from an image-editing terminal device, which is provided with a display section for displaying an original document image to be formed on a printing plate and an editing section for editing said original document image, and that outputs a first document image based on said first digital image data, which represent said first document image acquired by editing said original document image by means of said editing section, said computer program comprising the functional steps of:
photo-electronically reading a second document image that is created from said first document image by writing correction instructions on it, with a resolution designated within a predetermined range, so as to generate second digital image data;
storing said second digital image data in a storage section; and
transmitting said second digital image data stored in said storage section to said image-editing terminal device through a network, so as to edit said second document image based on said second digital image data according to said correction instructions written on said second document image.

35. The computer program of claim 34,
wherein said resolution, with which said second document image is read in said reading step, is lower than that of said first document image.

36. The computer program of claim 34,
wherein said predetermined range is in a range of 46.4 dpi - 325.1 dpi.

37. The computer program of claim 34, further comprising the functional step of:
designating said resolution with which said second document image is read in said reading step.

38. A computer program for executing operations in an image outputting apparatus that receives first digital image data transmitted from an image-editing terminal device, which is provided with a display section for displaying an original document image to be formed on a printing plate and an editing section for editing said original document image, and that outputs a first document image based on said first digital image data, which represent said first document image acquired by editing said original document image by means of said editing section, said computer program comprising the functional steps of:
photo-electronically reading a second document image that is created from said first document image by writing correction instructions on it, so as to generate second digital image data;
storing said second digital image data in a storage section;
converting a resolution of said second digital image data stored in said storage section, so as to generate third digital image data having a converted resolution; and
transmitting said third digital image data to said image-editing terminal device through a network, so as to edit said second document image based on said third digital image data according to said correction instructions written on said second document image.

39. The computer program of claim 38,
wherein said converted resolution of said third digital image data is lower than that of said second digital image data.

40. The computer program of claim 38,
wherein said converted resolution of said third digital image data is in a range of 46.4 dpi - 325.1 dpi.

41. The computer program of claim 38, further comprising the functional step of:
designating said converted resolution in a range of 46.4 dpi - 325.1 dpi; and
wherein said resolution converting section converts said resolution of said second digital image data stored in said storage section, so as to generate said third digital image data having said converted resolution designated in said designating step.

42. The computer program of claim 38, further comprising the functional step of:
acquiring data of a size of said first document image and a resolution of said display section;
wherein said resolution of said second digital image data stored in said storage section is converted within a range of 46.4 dpi - 325.1 dpi, corresponding to said data of said size of said first document image and said resolution of said display section, acquired in said acquiring step, so as to generate said third digital image data having said converted resolution.

43. The computer program of claim 34,
wherein a size of said original document image is in a range from a postcard size to an A3 size, while a resolution of said display section, which displays said second document image having said correction instructions on it, is in a range of 768x1024 dots - 1024x1280 dots.

44. The computer program of claim 34,
wherein said image outputting apparatus is a color laser printer.

45. A storage medium, storing:
a computer program for executing operations in an image outputting apparatus that receives first digital image data transmitted from an image-editing terminal device, which is provided with a display section for displaying an original document image to be formed on a printing plate and an editing section for editing said original document image, and that outputs a first document image based on said first digital image data, which represent said first document image acquired by editing said original document image by means of said editing section;
wherein said computer program comprises the functional steps of:
photo-electronically reading a second document image that is created from said first document image by writing correction instructions on it, with a resolution designated within a predetermined range, so as to generate second digital image data;
storing said second digital image data in a storage section; and
transmitting said second digital image data stored in said storage section to said image-editing terminal device through a network, so as to edit said second document image based on said second digital image data according to said correction instructions written on said second document image.

46. The storage medium of claim 45,
wherein said resolution, with which said second document image is read in said reading step, is lower than that of said first document image.

47. The storage medium of claim 45,
wherein said predetermined range is in a range of 46.4 dpi - 325.1 dpi.
